# EUROPÄISCHE PATENTANMELDUNG

(11) **EP 2 913 086 A2**
(43) Veröffentlichungstag der Anmeldung: **02.09.2015**
(21) Anmeldenummer: 15000542.9
(22) Anmeldetag: 25.02.2015
(51) Int. Cl.: A63F 9/10, A63F 13/213, A63F 13/69, A63F 13/92

(54) **Puzzlespiel**

(30) Priorität: 25.02.2014 DE 102014002449; 10.05.2014 DE 102014006708
(71) Anmelder: Kindertäume GmbH, 42855 Remscheid (DE)
(72) Erfinder: von Polheim, Lothar, 42855 Remscheid (DE)
(74) Vertreter: Pfingsten, Dieter

(57) **Zusammenfassung**

Bei einem Puzzlespiel, dessen Gesamtbild aus mehreren Einzelplatten mit jeweils einem Teilbild zusammensetzbar ist, sind auf mehreren Teilbildern (2) Marken angeordnet, die in dem Gesamtbild (1) in Ihrer Gesamtheit einen mittels Lesegerät (3) lesbaren Code ergeben. Der Code enthält einen im Betriebssystemen des Lesegeräts lesbaren Steuerbefehl zum Programmaufruf eines mittels des Lesegeräts steuerbaren Modifikationsprogramms zur Modifikation des Gesamtbildes (=Spielprogramm (10)). Dadurch kann der Eindruck erweckt werden, dass das Gesamtbild belebt ist. Die Codierung kann durch digitale Markierungen wie ein QR - Code (Quick Response) aufgebaut sein, ist jedoch über mehrere Bausteine des Puzzle verteilt. Der Datenteil des Codes weist einen Unk auf einen im Internet zugreifbaren Speicher (APP-Store (7)), und ein dort gespeichertes Anwendungsprogramm (Spiele-APP (8)) auf. Als Marken zur Codierung kommen auch ausgewählte markante Bildpunkte des Gesamtbildes (1) in Betracht, deren Soll-Anordnung identisch in einem Sollspeicherbereich (9.1) hinterlegt ist und mittels eines speziellen Anwendungsprogramms (BILD-APP (9)) lesbar ist.

## Beschreibung

Das Puzzlespiel nach dem Oberbegriff des Anspruch 1 ist ein allgemein beliebtes Spiel. Es hat jedoch den Nachteil, dass sein Unterhaltungswert verschwindet, sobald es zusammengesetzt und das gesamte Bild sichtbar ist.

Aufgabe dieser Erfindung soll es sein, den unterhaltungswert zu steigem, indem das Gesamtbild nach dem Zusammensetzen zu weiteren Spielen genutzt und mit virtuellem Leben erfüllt wird.

Diese Aufgabe wird erfüllt durch Anspruch 1.

Dabei wird das Gesamtbild so gestaltet, dass es einzelne Bildpunkte enthält, welche auf unterschiedlichen Bausteinen angeordnet sind und in Ihrer Gesamtheit erst bei zusammengesetztem Gesamtbild eine Codierung mit einem bestimmten Inhalt bilden. Bei der Codierung kann es sich zum Beispiel um digitale Markierungen handeln, die -wie ein QR - Code (Quick Response) aufgebaut, jedoch über die eine größere Fläche, zumindest über mehrere Bausteine des Puzzle verteilt sind. Es können alle oder -vorzugsweise- nur ausgewählte Bildpunkte des Gesamtbildes zur Codierung dienen.

Diese Bildpunkte/Markierungen nebst den erforderlichen Marken zur Feldbegrenzung und Orientierung können mit dem Lesegerät abgetastet und Ihr Inhalt ermittelt werden.

Im Speicher des Lesegeräts ist ein Anwendungsprogramm hinterlegt (Leseprogramm, Bild-APP), welches durch den Datenteil des Codes aufgerufen wird. Das Lesegerät erhält durch das Bild-APP den Befehl, auf einen Datenspeicher mit einem darin gespeicherten Modifikationsprogramm zuzugreifen, welches auf dem Bildschirm des Lesegeräts die modifizierte Darstellung des Gesamtbildes des Puzzles oder von Teilbereichen des Gesamtbildes ermöglicht Dieses Modifikationsprogramm enthält einen Datenteil, der verschiedene Darstellungen des Puzzles oder seiner Modifikationen enthält, und einen Steuerteil **(Spielsteuerprogramm).** der die Steuerbefehle zum Abspielen der Modifikationen auf dem Bildschirm des Lesegeräts enthält. Durch das Lesegerät sind also die modifizierten Darstellungen des Puzzlebildes oder eines darin enthaltenen Motivs bei geeigneten, ebenfalls übermittelten Steuerbefehlen abspielbar.

Das Modifikationsprogramm kann Bestandteil des Bild-APP sein oder wird bei Erkennen der Codierung aus dem Internet aufgeladen.

Zum Lesen und Weiterverarbeiten des Datenteils dieses Codes -der codierten Bildpunkte des Puzzle- kann als Bild-APP ein handelsübliches auf dem Lesegerät installiertes QR-Leseprogramm (QR-APP) dienen, welches die Steuerbefehle des Datenteils des Codes freigibt und sodann die Zuladung des Modifikationsprogramms = Spiele-Anwendungsprogramms (SPIELE-APP) auf das Lesegerät gestattet.

In einer anderen Version wird zuvor auf dem Lesegerät das spezielle Anwendungsprogramm (BILD-APP) installiert, welches die Bildpunkte des ausgelegten Puzzle-Gesamtbildes abtastet und mit einem in dem BILD-APP hinterlegten Datensatz mit den (ausgewählten) Bildpunkten des Gesamtbildes vergleicht und bei Übereinstimmung der codierten Bildpunkte den Datenteil frei gibt. Das Bild-APP kann von dem Käufer des Puzzle vorzugsweise beim Kauf des Puzzlespiels erworben werden und wird von dem Herstellers des Puzzle in einem über das Internet erreichbaren Speicher (APP-Store) bereitgestellt.

Dieses in dieser Weise ausgestaltete Puzzlespiel hat die Eigenschaft, mit Hilfe eines angepassten Lesegeräts den Eindruck der Belebtheit des Bildes hervorrufen zu können, wobei es nicht auf das Bild an sich ankommt sondern darauf, dass das Bild aus den Teitbildem des Puzzles richtig zu dem Gesamtbild zusammengefügt ist. Schon wenn ein Baustein, der eine der Codierung dienende Markierung enthält, fehlt oder falsch ausgelegt ist, geht diese Eigenschaft verloren.

Die Markierungen können schwarz oder bunt sein. Sie werden vorzugsweise so ausgelegt, dass sie den optischen Eindruck des Bildes nicht verändern bzw. Teil des optischen Eindrucks sind und nur mit der SCAN-Kamera des Lesegeräts erfasst werden.

Durch den Steuerbefehl des Code bzw des Bild-APP erfolgt der Programmaufruf des in dem Lesegerät speicherbaren Anwendungsprogramms für Spiele (=Modifikationsprogramm =Spiele-APP).

Das Anwendungsprogramm für Spiele (=Modifikationsprogramm =Spiele-APP) kann bereits Bestandteil des Bild-APP sein.

Es kann jedoch auch alternativ von dem Herstellers des Puzzle in einem über das Internet erreichbaren Speicher (APP-Store) bereitgestellt und durch das Bild-APP bei Erkennen des vorgegebenen Code's aus dem Internet in das Lesegerät geladen werden.

In der bevorzugten Weiterbildung nach Anspruch 5 wird vorgesehen, dass die Spiele-APP zur Modifizierung und vorzugsweise zur interaktiven Modifizierung des Gesamtbildes dient

Hierzu dient eine Modifikationsdatei, welche vorzugsweise auf dem Lesegerät gemeinsam mit der Spiele-APP und Bild-APP, alternativ jedoch im Hintergrund, d.h. nicht auf dem Lesegerät sondern auf einem fremden Computer gespeichert ist. Dieser Computer ist zum Beispiel und vorzugsweise über das Internet von dem Lesegerät aus erreichbar. Durch den Datenteil des Code (z.B. QR-Code) beziehungsweise durch das Bild-APP, welches bei Übereinstimmung vorbestimmter Bildpunkte aufgerufen wird, wird das Spiele-APP angesprochen. Dieses enthält die Steuerbefehle zum Aufruf des Modifikationsprogramms (Spiele-Programm) und der Modifikationsdatei sowie zum Aufruf, Öffnen und Schließen einzelner Datensätze der Modifikationsdatei.

Die Datensätze der Modifiketionsdatei repräsentieren Modifikationen des Gesamfbildes und/oder einzelner Elemente des Gesamtbildes. Wenn zum Beispiel das Gesamtbild einen Delfin darstellt, so kann der Delphin in einer Sequenz von Datensätzen im Sprung aus dem Wasser dargestellt werden. Diese Sequenz von Datensätzen kann durch Eingabe eines Steuerbefehls mittels des Lesegerätes über die Spiele-App abgerufen werden.

Vorzugsweise wird auch das Gesamtbild als Datensatz gespeichert. Daher können das Gesamtbild wie auch die Modifikationen des Gesamtbildes auf dem Bildschirm des Lesegerätes sichtbar gemacht werden. Die abgerufene Sequenz von Datensätzen erscheint auf dem Bildschirm als Video des springenden Delphins.

In der Ausbildung nach Anspruch 6 wird die Öffnung des Spieleprogramms sowie der Modifikationsdatei und ihrer Datensätze durch einen Dauerbefehl bewirkt, der durch das Lesegerät ausgelöst wird, solange das Lesegerät über das Gesamtbild des fertigen Gesamtbildes gehalten und dadurch der Code eingelesen wird. Das hat den überraschenden Effekt, dass die Darstellung auf dem Bildschirm des Lesegeräts als Modifikation des darunter liegenden Gesamtbildes erscheint und damit dem "toten" Gesamtbild virtuelles "Leben" gegeben wird. Das bedeutet, dass mittels der Kamera des Lesegeräts das ausgelegte Puzzle photographiert und auf dem Bildschirm dargestellt und durch seine eingespielten Modifikationen ersetzt oder -so in der bevorzugten Alternative nach Anspruch 12 und 13- überlagert wird.

Wenn nunmehr das Lesegerät von dem Gesamtbild abgewendet wird, so verschwindet auch die Darstellung des Gesamtbildes bzw. seiner Modifikation von dem Bildschirm des Lesegeräts, und die Modifikationsdatei wird wieder geschossen. Wenn dagegen nach Aktivierung des QR - Leseprogramms beziehungsweise des BILD-APP das Lesegerät mit seiner Kamera wieder über das fertig ausgelegte Puzzle-Gesamtbild gehalten wird, erscheint das Gesamtbild wieder auf dem Bildschirm und es können wieder die Modifikationen des Gesamtbildes abgerufen werden.

Die -von dem Herstellers des Puzzle in einem über das Internet erreichbaren Speicher (APP-Store) bereitgestellte Modifikationsdatei enthält, vorzugsweise Datensätze, weiche Gegenstände des Puzzlebildes als Modell darstellen (Anspruch 9) in verschiedenen Ansichten und/oder Positionen. Es können auch Ton- oder Geräuschsignale in der Modifikationsdatei hinterlegt sein, weiche mit einer bestimmten Ansicht des Modells aufgerufen werden. Dadurch entsteht der vorteilhafte Eindruck der Authentizität und Lebensechtheit der dargestellten Ansicht. Weiterhin wird als bevorzugt in Anspruch 13 vorgesehen, dass die Modelldarstellungen perspektivisch sind und dass das durch die Kamera des Lesegeräts aufgenommene Gesamtbild des Puzzle hierdurch nicht nur pauuschal und insgesamt ersetzt sondern nur durch entsprechende Vorrangsignale deer Modelldaten überlagert wird. Es kann hierdurch der Eindruck erzeugt werden, dass der mitels der Spiele-APP eingespielte Gegenstand sich in dem Gesamtbild des photographierten Puzzle bewege und dadurch Bereiche des Gesamtbildes verdecke. Die Weiterbildungen der Erfindung nach den Ansprüchen 9 und 10 erlauben die Illusion, dass das eingespielte Modell aus unterschiedlichen Richtungen aufgenommen wird. Hierzu werden die Daten der Modifikationsdatei, welche das Modell aus einer bestimmten Richtung beschreiben, durch den Lagedetektor des Lesegeräts und/ oder durch Vermessung der Lage der Kamera relativ zu dem ausgelegten Puzzlebild aufgerufen.

Ein besonders reizvolles interaktives Spiel mit dem ausgelegten Gesamtbild wird dadurch ermöglicht, dass das Lesegerät einen Touch-Screen besitzt. Dieser Berührungs-Bildschirm ist in der Lage, Steuerbefehle auszulösen, welche den Koordinaten des Berührungspunkte auf dem Bildschirm entsprechen. Diesen Koordinaten ist in dem Spieleprogramm eine entsprechende Sequenz von Steuerbefehlen zum Zugriff auf Modifikationsdatensätzen zugeordnet, die nun aufgerufen wird. In diesem Falle ist es zum Beispiel möglich, den oben genannten Delphin an einer bestimmten Stelle und in einer bestimmten Richtung aus dem Wasser springen zu lassen.

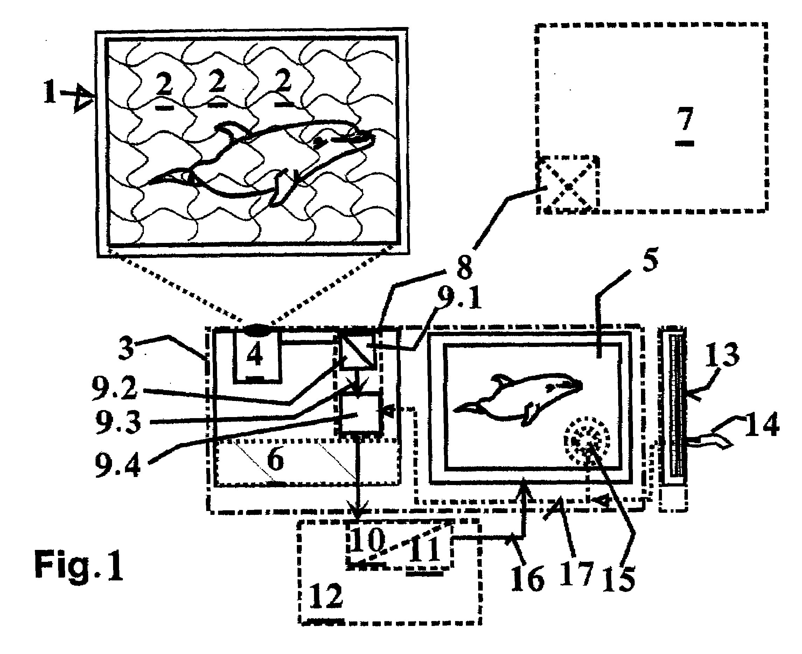

Im Folgenden werden Ausführungsbeispiele anhand der Zeichnung beschrieben. Als Ausführungsbeispiel ist in Fig.1 ein Gesamtsystem mit einer Bilderkennung dargestellt. Das fertig ausgelegte Gesamtbild 1 des Puzzle stellt einen Delfin dar. Das Gesamtbild ist aus Einzelplatten 2 zusammengesetzt. Das Gesamtbild weist-hier nicht sichtbare - Markierungen auf, die in ihrer Gesamtheit eine vorgegebenen Bedeutung haben. Es kann sich zum Beispiel um digitale Markierungen handeln, die sich in dem dargestellten Gesamtbild so verbergen, dass sie den optischen Eindruck des Puzzle-Bildes nicht stören, jedoch einschließlich ihrer der Feldbegrenzung und Orientierung dienenden Markierungen und ihres sachlichen Inhalts (Datenteil) durch ein Lesegerät 3, z.B.eine geeignete mit einem geeigneten Programm ausgerüstete Kamera, z.B. Smart-Phone lesbar sind.

Im vorliegenden Falle wird ein übliches Lesegerät 3, zum Beispiel ein Smart-Phon mit seiner Kamera 4 zum Abtasten (scannen) des Gesamtbildes benutzt. Dabei wird gleichzeitig das Gesamtbild auf dem Bildschirm 5 des Lesegerätes sichtbar gemacht. Einzelnen Bildpunkten des Gesamtbildes ist ein sachlicher Inhalt in der Weise zugeordnet, dass diese Bildpunkte in ihrer geometrischen Zuordnung des Gesamtbildes das logische Signal "JA" bedeuten.

In das Lesegerät 3 mit Betriebssystem 6 wurde aus einem externen Speicher 7 (App-Store) ein Spiele-Anwendungsprogramm (Spiele-APP) 8 heruntergeladen. Die Berechtigung zum Erwerb dieses Spiele-APP 8 hat der Käufer mit dem Kauf des Puzzle erworben.

Das Spiele-APP 8besitzt als Teilprogramm ein Leseprogramm, BILD-APP 9 mit einem Sollspeicher 9.1 und einem Rechnerteil 9.2. In dem Sollspeicher 9.1 sind vorgegebene Bildpunkte vom Hersteller des Puzzle eingespeichert, welche den ausgewählten Bildpunkten im Gesamtbild des Puzzle hinsichtlich ihrer Bitdkoordinaten entsprechen.

Diese Soll-Bildkoordinaten werden in den Rechnerteil 9.2 eingelesen. Andererseits werden die beim Scannen des realen Gesamtbildes 1 ermittelten Ist-Bildpunkte von der Kamera 4 in den Rechnerteil 9.2 übertragen, dort mit den Koordinaten der Soll-Bildpunkte verglichen. Bei Übereinstimmung wird ein "JA"-Signal 9.3 als Dauersignal erzeugt, das ansteht, solange die Kamera im Lesebetrieb diese Bildpunkte oder einen wesentlichen Teil dieser Bildpunkte erfasst. Wird der Scan-Vorgang unterbrochen, z.B. die Kamera von dem Gesamtbild abgewendet, fällt das "JA"-Sagnal 9.3 ab.

Das "JA"-Signal 9.3 dient als Steuerbefehl zum Programmaufruf eines weiteren Unter-Anwendungsprogramms 9.4 (Steuerteil 9.4), welches als Steuerprogramm der Spiele-APP 8 dient.

Durch den Steuerbefehl 9.3 wird der Steuerteil 9.4 des Spiele-APP 8 veranlasst, über eine geeignete Verbindung das im Internet bereitgestellten Modifikationsprogramm zur Modifikation des Gesamtbildes aufzurufen. Dieses Spieleprogramm 10 wird hier in einem Fremdcomputer 12, der über das Internet erreichbar ist, bereitgestellt.

Das Spieleprogramm 10/ das Modifikationsprogramm besitzt den Steuerteil 10 und die in dem selben fremden Computer 12 bereitgestellte Modifikationsdatei 11. Diese Datei enthält eine Fülle von Datensätzen, in denen Bildpunkte gespeichert sind, welche Abwandlungen, Modifikationen, Bildfolgen, Modelle und so weiter des Gesamtbildes oder von Teilen des Gesamtbildes, zum Beispiel eines abgebildeten Gegenstandes repräsentieren. Der Delphin in der im Gesamtbild dargestellten Position wie auch in aus dieser Position abgeleiteten Bewegungen kann also in einer Sequenz von Datensätzen dargestellt werden. Die Datensätze für diese Darstellung werden durch die Sequenz der Signale: gleichzeitige Scansignal (Steuerbefehl 9.3) zum Programmaufruf des Spiele-APP und Handeingabe am Touch-Screen 5 (siehe unten) zum Aufruf eines bestimmten Datensatzes durch Steuerteil 10 des Modifikationsprogramms 10/11.

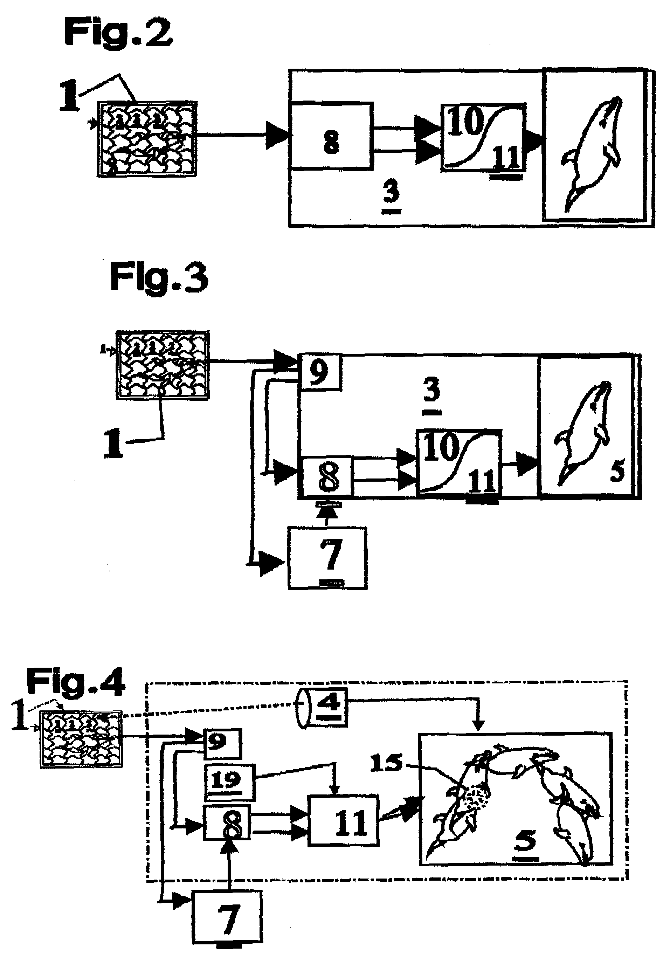

Der Bildschirm 5 ist als Berührungsbildschirm ausgebildet. In der Fig.1 ist ein schematischer Querschnitt dieses Bildschirms zu sehen. Die Sichtfront 13 dieses Bildschirms ist als Kontaktfläche ausgebildet Durch Berührung mit dem Finger 14 oder einem Stift werden die beiden Kontaktflächen des Bildschirms elektrisch zusammengebracht in einem Berührpunkt 15, welcher hier durch punktierte Kreise dargestellt ist. Die Koordinaten dieses Bildpunktes 15 werden sodann in dem Lesegerät dem Steuerteil 9.4 der Spiele-APP 8 aufgegeben. Durch Weiterleitung dieses Steuerbefehls über Internet an den Fremdcomputer 12 und dessen Modifikationsprogramm 10/11 wird über Steuerteil 10 aus dem Datenteil 11 (Zum Beispiel) eine Sequenz von Datensätzen abgerufen, welche den Delphin im Sprung aus dem Wasser repräsentieren. Diese Sequenz wird sodann als Signal 16 an den Bildschirm übertragen und darauf als Video sichtbar gemacht. Da sich der Bildschirm dabei über dem realen Gesamtbild 1 befindet, hat der Betrachter den Eindruck, als habe er den auf dem Puzzle-Gesamtbild dargestellten Delphin zum Sprung veranlasst und hinsichtlich Richtung und Höhe des Sprungs gesteuert Zur Beschreibung der Erfindung dienen weiterhin die Figuren 2 bis 6, die für funktionsgleiche Elemente dieselben Bezugszeichen wie Fig.1 verwenden. Die voraufgegangene und nachfolgende Beschreibung gilt im übrigen für die Figuren 1 bis 6, soweit nicht für die einzelnen Figuren Besonderheiten hervorgehoben sind. Fig.2 stellt das Grundprinzip der Erfindung dar. Das ausgelegte Gesamtbild 1 des Puzzle wird durch ein Lesegerät 3 gescannt. Das Lesegerät weist -wie der Name besagt- eine Kamera oder einen Scanner zum Abtasten und Einlesen von Bildpunkten auf. In dem Lesegerät ist ein Anwendungsprogramm -in dieser Anmeldung als Spiele-APP bezeichnet- zum Aufruf und Abspielen einer Modifikationsdatei 11 gespeichert. Diese Spiele-APP wird aktiviert, wenn und solange vorbestimmte Bildpunkte des Gesamtbildes 1 mit im Lesegerät, d.h. in der Spiele-APP hinterlegten Codierungen während des Einscannens übereinstimmen. Durch die Spiele-APP wird aus der Modifikationsdatei 11 eine Darstellung eines Gegenstandes des Gesamtbildes -hier Delphin- in einer anderen Position abgerufen und auf dem Bildschirm 5 sichtbar.

Die Modifikationsdatei kann -ebenso wie die Spiele-APP- aus dem Internet geladen und auf dem Lesegerät abgespeichert werden. Wenn die Modifikationsdetei sehr groß ist, kann die Modifikationsdatei jedoch auch aus dem Internet aufgerufen werden.

Fig.3 bezieht sich insbesondere auf die Weiterbildung nach Anspruch 3. Es ist dargestellt, dass die Spiele-APP und/oder die Modifikationsdatei 10/11 aus dem Internet, bezeichnet mit APP-Store 7 geladen werden kann. Hierzu mag eine Autorisierung des Herstellers des Puzzle dienen.

Ferner ist ersichtlich, dass die Anwendungsprogramme zur Erkennung der Codierung (Bild-APP 9) und zum Aufruf und zur Steuerung der Modifikationsdatei (Spiele-APP 8) getrennt sein können. Das bedeutet, dass die Bild-APP 9 mit Erwerb des Puzzle erworben oder aus dem Internet geladen wird, während die Spiele-APP erst durch die Bild-APP, d.h. bei Fertigstellung und Abtasten des Gesamtbildes aus dem APP-Store 7 abgerufen wird. Hierdurch wird es möglich mit einer Bild-APP sehr unterschiedliche und vielfältige Spiele-APP/ Modifikationsprogramme mit Steuerteil 10 und Datenteil 11 abzurufen, zu laden und zu benutzen.

Fig.4 dient insbesondere zur Erklärung der Weiterbildung nach Anspruch 8ff.ln der Modifikationsdatei sind die Daten eines Modells eines Gegenstandes des Gesamtbildes 1 -hier eines Delphins- in unterschiedlichen Positionen und Ansichten hinterlegt. Einzelne dieser Positionen und Ansichten können durch Berührung des Bildschirms 5 im Berührpunkt 15 aufgerufen werden. Es kann so z.B. der Delphin im Sprunge dargestellt werden. Durch die Abtastung des Gesamtbildes 1 mittels der Kamera 4 wird die Spiele-APP aktiviert, so dass dauernd ein Modifikationsbild auf dem Bildschirm erscheint Hier ist dargestellt, dass die Spiele-APP 8 mit Steuerteil und Datenteil 11 auf das Lesegerät 3 zuvor geladen wurde.

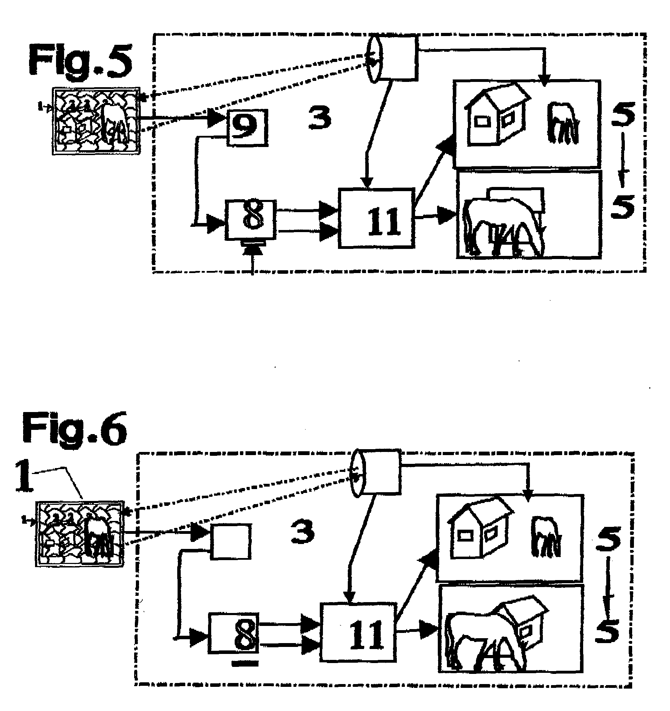

Fig.5 dient darüber hinaus zur Erklärung der Weiterbildung nach Anspruch 10. Durch die Abtastung des Gesamtbildes 1 mittels der Kamera 4 wird nicht nur die Spiele-APP aktiviert, so dass dauernd ein Modifikationsbild auf dem Bildschirm erscheint. Es erfolgt vielmehr auch eine Ermittlung der Lage des Lesegerät 3 relativ zu dem Gesamtbild 1. Dazu ist die Codierung des Puzzle sowie das Leseprogramm des Spiele-APP 8 so erstellt, dass durch die Beabstandung der eingelesenen Markierungen die Relativlage des Lesegeräts erkannt und mittels des Steuerteils in den Aufruf eines entsprechenden Datensatzes aus dem Modifikationsprogramm 10/11 auf dem Bildschirm 5 umgesetzt werden kann.

Als Alternative ist in Fig.5 dargestellt, dass ein Lagedetektor 19 die Absolutlage des Lesegeräts oder die Relativlage des Lesegeräts relativ zur Lage und Bildebene des ausgelegten Puzzlebildes 1 erfasst.

Jedenfalls kann die dargestellte Ansicht des Modells der Relativlage des Lesegeräts angepasst und die Illusion hervorgerufen werden, dass das Haus mit Blick auf die Längsseite aufgenommen werde und das Pferd diese Längsseite teilweise verdecke. Es wird also einmal das Gesamtbild in dessen originaler Ansicht und sodann, bei entsprechender Änderung der Position und Ausrichtung des Lesegeräts relativ zu dem Gesamtbild die Seitenansicht desselben Gegenstandes in der -möglichst-naturgetreuen Ausgestaltung auf dem Bildschrim gezeigt.

Es kann aber auch- wie in Fig. 6 dargestellt- die Illusion vermittelt werden, die Lage des Lesegerät sei unverändert auf die schmale Seite des Hauses gerichtet, dass Pferd habe sich jedoch bewegt und verdecke nun einen Teil dieser Front.

Es wird also automatisch bei unveränderter Position des Lesegeräts nacheinander eine Sequenz von Datensätzen aufgerufen mit Darstellungen des Pferdes an unterschiedlichen Stellen.

Ebenso kann man aber auch im Datenteil des Modifikationsprogramms Datensätze eines Video-Films über das sich bewegende Pferd hinterlegen und diese Datensätze über das Sprachprogramm des lesegeräts (z.B. SIRI) durch bestimmte Worte/ Rufe aufrufen.

Zur Hervorhebung der benutzten Synonyme werden im Folgenden die Einzelteile und Programme der Datenverarbeitung aufgeführt
- Lesegeräts 3, Smart-Phone mit Kamera 4, Bildschirm 5 und Betriebssystem 6
   ∘ QR - Code (Quick Response) QR-Leseprogramm (QR-APP)
- Spiele-Anwendungsprogramm =Spiele-APP 8
   ∘ Mit Leseprogramm sowie Bild-APP 9 mit Sollspeicher 9.1 und Rechnerteil 9.2.
- Modifikationsprogramm 10,11 = (Spiele-Programm) (SPIELE-APP) 8
   o welches auf dem Bildschirm 5 des Lesegeräts 3 die modifizierte Darstellung des Gesamtbildes des Puzzles oder von Teilbereichen des Gesamtbildes ermöglicht.
   ∘ Ist Bestandteil des Leseprogramms= Bild-APP 9 oder
   ∘ wird bei Erkennen der Codierung aus einem externen Speicher 7, dem Interne, APP-Store 7 aufgeladen,
      besitzt
      - Datenteil 11 Modifikationsdatei 11 Datensätze
      - Steuerteil **10 Spielsteuerprogramm).**

- 1: Puzzlespiel, Gesamtbild 1
- 2: Einzelplatten, Teilbild 2
- 3: Lesegerät Smartphone 3
- 4: Kamera 4
- 5: Bildschirm, Berührungsbildschirm (Touchscreen) 5
- 6: Betriebssystem 6
- 7: im Internet zugreifbarer Speicher (APP-Store) 7
- 8: Anwendungsprogramm, Spielsteuerprogramm, (Spiele-APP) mit
- 9: Leseprogramm, (BILD-APP)
- *9.1*: *Sollspeicher*
- *9.2*: *Rechnerteil*
- *9.3*: *Steuerbefehl zum Programmaufruf, "JA"-Signal 9.3*
- *9.4*: *Steuerteil*
- 10: Modifikationsprogramm Steuerteil zur Modifikation des Gesamtbildes (=Spielprogramm).
- 11: Modifikationsprogramm, Datenteil, Modifikationsdatei
- 12: Fremdcomputer
- 13: Vorderfront, Frontseite
- 14: Finger
- 15: Berührpunkt
- 16: Datensatzsignal
- 17: Signal der Bildschirmkoordinaten, des Berührpunktes
- 18: Marken zur Feldbegrenzung und Orientierung
- 19: Lagedetektor

## Patentansprüche

1. Puzzlespiel, dessen Gesamtbild aus mehreren Einzelplatten mit jeweils einem Teilbild zusammensetzbar ist,
**dadurch gekenntzeichnet, dass**
auf mehreren Teilbildern (2) Markierungen angeordnet sind, die in dem Gesamtbild (1) in Ihrer Gesamtheit einen mittels Lesegerät (3) lesbaren Code ergeben, welcher einen im Betriebssystemen des Lesegeräts lesbaren Steuerbefehl enthält zum Programmaufruf eines mittels des Lesegeräts steuerbaren Modifikationsprogramms (=Spielprogramm (10/11)) zur Modifikation des Gesamtbildes und/oder Teile und/oder Motive des Gesamtbildes.

2. Puzzlespiel nach Anspruch 1,
**dadurch gekennzeichnet, dass**
als Marken zur Codierung digitale Markierungen dienen, die wie ein QR - Code (Quick Response) aufgebaut, jedoch über eine größere Fläche, zumindest über mehrere Bausteine des Puzzle verteilt sind,
und dass der Datenteil des Codes den Verweis (=Dateiverknüpfung =Link) auf einen im Internet zugreifbaren Speicher (APP-Store (7)), und das dort gespeicherte Anwendungsprogramm (Spiele-APP (8)) enthält, das zur Steuerung des Modifikationsprogramms (=Spielprogramm (10/11)) in das Lesegerät kopiert werden kann.

3. Puzzlespiel nach Anspruch 1,
**dadurch gekennzeichnet, dass**
als Marken zur Codierung alle oder ausgewählte markante Bildpunkte des Gesamtbildes (1) dienen, wobei deren Anordnung identisch in einem Sollspeicherbereich (9.1) hinterlegt und mittels eines auf das Lesegerat installierbaren speziellen Anwendungsprogramms (BILD-APP (9)) lesbar ist,
und dass das BILD-APP bei Übereinstimmung der im Gesamtbild des ausgelegten Puzzle enthaltenen Bildpunkte
a) den Verweis (=Dateiverknüpfung =Link) auf einen im Internet zugreifbaren Speicher (APP-Store (7)) und das dort gespeicherte Anwendungsprogramm (Spiele-APP (8)) derart freigibt, dass das Spiele-APP (8)) in das Lesegerät kopiert
b) ujnd/oder von diesem gelesen werden kann,
c) und/oder -sofern das Spiele-APP (8)) bereits in das Lesegerät geladen ist-den Freigabebefehl (9.3) für das auf dem Lesegerät installierbare und gespeicherte Anwendungsprogramm (Spiele-APP (8)) zur Steuerung des Modifikationsprogramms gibt.

4. Puzzlespiel nach Anspruch 1,
**dadurch gekennzeichnet, dass**
auf dem Lesegerät ein Anwendungsprogramm (BILD-APP 9) installiert ist,
dessen Datenteil den Verweis (=Dateiverknüpfung =Link) auf einen im Internet zugreifbaren Speicher (APP-Store 7), und das dort gespeicherte Anwendungsprogramm/ Spiele-APP (8) enthält, das in das Lesegerät kopiert werden kann.

5. Puzzlespiel nach Anspruch 1,
**dadurch gekennzeichnet, dass**
das Anwendungsprogramm (=Spiele-APP (8)) zusätzlich zu einem Verweis (=Dateiverknüpfung =Link) auf eine Modifikationsdatei (10,11) auch die Steuerbefehle zum öffnen und Schließen der Datensätze der Modifikationsdatei veranlassen kann.
wobei die Datensätze der Modifikationsdatei das Gesamtbild sowie weitere Modifikationen des Gesamtbildes repräsentieren,
und auf dem Bildschirm des Lesegeräts als Gesamtbild bzw. dessen Modifikationen sichtbar gemacht sind,
und wobei die Steuerbefehle durch das Lesegerät aufrufbar sind.

6. Puzzlespiel nach Anspruch 1,
**dadurch gekennzeichnet, dass**
der Datenteil des Code bzw. des BILD-APP (8) Oder der SPIELE-APP (9) Steuerteil (10) einen andauernden Steuerbefehl zum Öffnen (Öffnungssignal) der Datensätze der Modifikationsdatei enthält, so dass zumindest ein Datensatz der Modifikationsdatei dauernd zur Darstellung auf dem Bildschirm (5) des Lesegeräts (3) ansteht bzw. verschwindet und das Öffnungssignal abfällt, wenn das Code-Signal nicht mehr ansteht.

7. Puzzlespiel nach Anspruch 1,
**dadurch gekennzeichnet, dass**
die Modifikationsdatei (10/11) auf einem Fremdcomputer gespeichert ist, welcher über das Lesegerät erreichbar, vorzugsweise über Internet erreichbar ist.

8. Puzzlespiel nach Anspruch 1.
**dadurch gekennzeichnet, dass**
die Modifikationsdatei eine Sequenz von Datensätzen enthält, die ein Video der Modifikationen des Gesamtbildes repräsentiert und durch einen Steuer Befehl abgerufen werden kann.

9. Puzzlespiel nach Anspruch 1,
**dadurch gekennzeichnet, dass**
die Modifikationsdatei die Daten (Datenteil 11) zur Beschreibung des dreidimensionalen Modells eines Gegenstandes, vorzugsweise eines in dem Puzzle dargestellten Gegenstandes sowie Steuerdaten (Steuerteil 10) zur dreidimensionalen Darstellung des Modells in unterschiedlichen Ansichten, d.h. insbesondere in unterschiedlichen Situationen oder Stellungen, aus unterschiedlich vorgegebenen Perspektiven und zur Auswahl einer der oder einer Folge von Ansichten (Modifikationsdaten) enthält,

10. Puzzlespiel nach Anspruch 1,
**dadurch gekennzeichnet, dass**
die Steuerdaten zur Auswahl einer der oder einer Folge von Ansichten durch den Lagedetektor des Lesegeräts aufrufbar sind,
* wobei ein Lagedetektor (19) die Absolutlage des Lesegeräts oder die Relativlage des Lesegeräts relativ zur Lage und Bildebene des ausgelegten Puzzlebildes (1) erfasst.
* oder wobei die Codierung des Puzzle sowie das Leseprogramm des Spiele-APP (8) so erstellt ist, dass als Sollwerte auch der seitliche und/oder Höhen-Abstand der Markierungen als Sollwert in dem Sollspeicher 9.1 bei senkrechter Aufsicht des Lesegeräts auf das Puzzle eingegeben ist und durch die Erfassung der seitlichen und Höhen-Beabstandung der eingelesenen Markierungen die Relativlage des Lesegeräts erkannt und mittels des Steuerteils in den Aufruf eines entsprechenden Datensatzes aus dem Modifikationsprogramm 10/11 auf dem Bildschirm 5 umgesetzt werden kann.

11. Puzzlespiel nach Anspruch 1,
**dadurch gekennzeichnet dass**
die Steuerdaten zur Auswahl einer der oder einer Folge von Ansichten aus dem Datenteil (11) der Modifikationsprogramm durch Handeingabe in den Rechner des Lesegeräts (3), vorzugsweise durch Signalauslösung mittels Bildschirmberührung aufrufbar sind.

12. Puzzlespiel nach Anspruch 1,
**dadurch gekennzeichnet, dass**
die Kamerasignale des aufgenommenen Puzzlebildes, welche zur Steuerung der Bildpunkte auf dem Bildschirm ((5) dienen, durch das Modifikationsprogramm, insbesondere durch Modifikationsdaten aus dessen Datenteil (11) und/oder Steuerdaten aus dessen Steuerteil (10) zur Beschreibung und Darstellung des dreidimensionalen Modells auf dem Bildschirm (5) überlagert oder ersetzt werden. xxxxxxxxxx

13. Puzzlespiel nach Anspruch 1,
**dadurch gekennzeichnet, dass**
die die Daten der ausgewählten perspektivischen Modelldarstellung durch ein Vorrangsignal codiert werden, um deren Vorrang vor den auf dieselben Bildschirmpunkte übertragbaren Kamerasignale derart zu markieren, dass Die Kamerasignale des eingescannten Puzzlebildes durch die Daten der ausgewählten persektivischen Modelldarstellung überlagert oder ersetzt werden

14. Puzzlespiel nach Anspruch 1,
**dadurch gekennzeichnet, dass**
der Bildschirm des Lesegeräts ein Berührungsbildschirm (Touchscreen) ist, mit welchem die Steuerbefehle des Modifikationsprogramms ausgelöst und weitere Modifikations- Datensätze abgerufen werden,
wobei die Bildschirmkoordinaten des jeweiligen Berührpunktes jeweils einem Steuerbefehl zum Aufruf einer zugeordneten Sequenz von Modifikationsdatensätzen oder eines Video entsprechen..
